**Europäisches Patentamt**

(19) **European Patent Office**

**Office européen des brevets**

(11) Numéro de publication: **0 080 607**
**B1**

(12) FASCICULE DE BREVET EUROPEEN

(45) Date de publication du fascicule du brevet:
24.10.84

(51) Int. Cl.³: **B 01 J 2/16,** A 23 C 9/16

(21) Numéro de dépôt: **82110198.7**

(22) Date de dépôt: **05.11.82**

(54) **Buse d'agglomération.**

(30) Priorité: **30.11.81 CH 7645/81**

(43) Date de publication de la demande:
**08.06.83 Bulletin 83/23**

(45) Mention de la délivrance du brevet:
**24.10.84 Bulletin 84/43**

(84) Etats contractants désignés:
**AT BE DE FR IT NL SE**

(56) Documents cités:
**FR - A - 2 202 724**
**US - A - 3 727 839**

(73) Titulaire: **SOCIETE DES PRODUITS NESTLE S.A., Case postale 353, CH-1800 Vevey (CH)**

(72) Inventeur: **Badertscher, Ernest, Chemin de Champ Bornu 7, CH-1350 Orbe (CH)**
Inventeur: **Grobety, Pierre, Saars 87, CH-2000 Neuchâtel (CH)**

## Description

La présente invention a pour objet une buse d'agglomération, comprenant un corps évidé axialement et verticalement dans lequel sont prévus un passage axial pour l'admission d'un produit pulvérulent à agglomérer, au moins une tuyère annulaire d'éjection coaxiale et extérieure audit passage pour l'éjection d'un fluide d'agglomération, et au moins une chambre annulaire de distribution coaxiale et extérieure à ladite tuyère pour la distribution du fluide d'agglomération dans la tuyère.

On connaît diverses buses d'agglomération à axe de symétrie vertical comprenant, en disposition coaxiale, au moins un passage pour un produit pulvérulent à agglomérer et au moins une tuyère d'éjection d'un fluide d'agglomération, par exemple de la vapeur. Ces buses sont généralement placées au sommet d'une tour d'agglomération parcourue, le cas échéant, par un courant d'air chaud destiné à sécher durant leur chute au bas de la tour les agglomérats formés dans une zone d'agglomération située à une certaine distance au-dessous de la buse. Plusieurs dispositions des divers éléments de la buse ont été proposées pour améliorer par exemple l'efficacité et la qualité de l'humectage superficiel des particules à agglomérer, la fréquence des collisions entre particules humectées et le contrôle de la grosseur et du poids spécifique des agglomérats formés. Le brevet US-A No 3727839 propose, par exemple, l'usage de tuyères coaxiales multiples à orifices d'éjection annulaires échelonnés le long du passage axial du produit pulvérulent pour provoquer une meilleure turbulence et un meilleur brassage du produit pulvérulent et du fluide d'agglomération. On a proposé aussi l'éjection du fluide d'agglomération par une tuyère coaxiale extérieure renforcée par une tuyère axiale intérieure pour que le courant de produit pulvérulent ne soit pas contacté que de l'extérieur, mais le soit aussi de l'intérieur. On connaît enfin l'usage de plusieurs tuyères ou courants coaxiaux de fluides différents tels que vapeur, air chaud et/ou air frais par exemple pour obtenir un effet de refroidissement du produit pulvérulent et améliorer la condensation de la vapeur sur les particules à agglomérer comme décrit dans le brevet FR-A No 2202724, ou bien pour empêcher le collage de particules sur des pièces chaudes telles que les pièces constituant la tuyère d'éjection de vapeur, ou bien encore pour sécher les agglomérats à peine formés.

Un inconvénient de ces buses connues est leur spécificité et leur manque de souplesse pour l'adaptation à l'agglomération de produits pulvérulents ou de mélanges de produits pulvérulents aux caractéristiques très diverses, notamment en ce qui concerne la forme et la régularité des particules, leur composition chimique, leur solubilité, leur hygroscopicité, leur état de cristallisation, leur porosité ou leur poids spécifique par exemple. Une buse connue calculée et dessinée pour une application précise ne se prête souvent pas à l'agglomération d'un autre produit pulvérulent qui exige l'étude et la mise au point d'une autre buse. Un autre défaut de ces buses d'agglomération connues est la difficulté que l'on rencontre souvent à éviter des gouttes de condensation formées par le fluide d'agglomération sur certaines parties de la buse, ces gouttelettes pouvant considérablement perturber le processus de l'agglomération et endommager le produit fabriqué.

La présente invention a pour but de pallier ces défauts et de proposer une buse du type ci-dessus perfectionnée qui se distingue par sa souplesse d'adaptation aussi bien au traitement des produits pulvérulents les plus divers qu'à des variations légères d'un produit pulvérulent déterminé ou des conditions de travail, ainsi que par la propreté de son fonctionnement.

A cet effet, la buse d'agglomération selon la présente invention comporte en outre au moins une première chambre annulaire coaxiale de chauffage, extérieure et adjacente à ladite chambre de distribution pour le chauffage de cette dernière, et au moins une deuxième chambre annulaire coaxiale de chauffage, extérieure et adjacente à l'extrémité de ladite tuyère d'éjection et disposée au-dessous de la chambre de distribution pour le chauffage de cette dernière et de l'extrémité de la tuyère.

Par ce principe de construction, on évite dans une large mesure la formation de gouttelettes gênantes en réduisant considérablement la condensation du fluide d'agglomération dans la chambre de distribution et à l'extrémité de la tuyère d'éjection. Cette conception permet également une construction rationnelle, robuste et compacte.

Dans une forme de réalisation préférée de la présente buse, ledit passage axial est délimité par une tubulure d'admission vissée dans la partie supérieure dudit corps de manière réglable par rotation sur son axe, et ladite tuyère est délimitée, à l'intérieur, par la surface extérieure de ladite tubulure et, à l'extérieur, par une paroi intérieure de ladite chambre de distribution. Cette conception permet le réglage en marche de l'ouverture de l'orifice de sortie de la tuyère par mouvement relatif des parois qui la délimitent.

De préférence, la chambre annulaire de distribution comporte un plafond, un fond incliné radialement vers l'extérieur pour le purgeage de condensats du fluide d'agglomération, une paroi intérieure présentant dans sa partie supérieure une collerette dirigée radialement vers l'extérieur, une ouverture annulaire de distribution entre la collerette et le plafond, et une paroi extérieure constituant une paroi intérieure de ladite première chambre de chauffage. Un filtre peut en outre est disposé dans ladite ouverture annulaire de distribution. Grâce à cette conception, ni les condensats éventuels qui seraient entraînés avec le fluide d'agglomération ni ceux qui se formeraient malgré tout dans la chambre de distribution ne peuvent passer dans la tuyère et sont aisément évacuables.

De préférence également, ladite extrémité de la tuyère d'éjection est formée d'un insert intérieur, fixé à l'extrémité inférieure de ladite tubulure d'admission, et d'un insert extérieur disposé dans le prolongement de ladite paroi intérieure de la chambre de distribution, les deux inserts étant amovibles et délimitant une fente d'éjection annulaire conique convergente, la largeur de la fente étant réglable en marche par rotation de ladite tubulure dans ledit corps. Ainsi, lorsqu'il s'agit de modifier radicalement le débit du fluide d'agglomération ou l'angle d'attaque du jet de fluide lors d'un changement du type de produit pulvérulent, il n'est pas nécessaire de changer toute la buse mais il suffit de changer les inserts. Mais, lorsqu'il s'agit d'adapter la vitesse ou le débit du fluide d'agglomération à de légères variations des caractéristiques du même produit pulvérulent ou des conditions de travail, il n'est pas nécessaire d'arrêter l'installation d'agglomération pour procéder à l'adaptation, mais celle-ci peut être réalisée en marche.

De préférence enfin, les pièces de la buse d'agglomération sont réalisées en acier inoxydable; le filetage de ladite tubulure et le taraudage correspondant dudit corps, de même que ledit insert intérieur de la tuyère, sont plaqués en nickel amorphe. Le plaquage du filetage a pour but d'éviter le grippage et de permettre le réglage en marche de la buse par rotation précise et sans à-coups de la tubulure dans le corps. Le nickelage de l'insert intérieur doit contribuer à éviter le collage du produit pulvérulent à l'extrémité aval du passage axial.

Dans une forme de réalisation particulière de la présente buse d'agglomération, ledit passage axial est annulaire et délimité à l'intérieur par un tube de guidage à l'intérieur duquel est disposée une buse à double flux pour la projection d'un aérosol. Cette modification autorisée par la conception générale de la buse peut être réalisée à tout moment, en pratique, par mise en place du tube de guidage et d'une buse traditionnelle à double flux dans la tubulure d'admission. Elle permet, par exemple, l'agglomération de produits pulvérulents particuliers tels que certains produits riches en amidon qui exigent un apport d'humidité considérable, pouvant aller jusqu'à 20% en poids du produit pulvérulent, la normale étant de quelques pourcent de solvant par rapport au poids des particules à agglomérer. Une telle quantité d'humidité ne pourrait pas être véhiculée par le fluide d'agglomération sous forme de vapeur sèche. Au contraire, une buse centrale à double flux, du type trompe de Venturi par exemple, dans laquelle le liquide serait de l'eau et le gaz d'aspiration et de projection serait de la vapeur d'eau, permet de créer un brouillard de gouttes d'eau microscopiques qui descend sur la zone d'agglomération et y fournit l'humidité d'appoint nécessaire. Cette forme de réalisation de la présente buse permet également la pulvérisation de solutions d'agents aromatisants, liants, colorants ou autres sur les agrégats en cours de formation dans la zone d'agglomération.

Dans le même ordre d'idée, on peut également prévoir plusieurs tuyères coaxiales autour dudit passage axial.

Dans une autre forme de réalisation particulière, la présente buse d'agglomération comporte un corps supplémentaire amovible sous ledit corps, serré contre ou à distance de celui-ci, ce corps supplémentaire présentant également un passage axial et, coaxialement de l'intérieur vers l'extérieur, au moins une tuyère d'éjection de fluide, une chambre de distribution de fluide et une chambre de chauffage. Cette forme de réalisation permet soit de renforcer l'effet d'agglomération en fournissant un brassage et une humectation d'appoint avec un fluide d'agglomération, soit de prévenir la remontée de particules déjà humectées ou l'accumulation de particules dans des angles morts par projection d'air comprimé à des endroits critiques, notamment au voisinage desdits inserts.

Dans le même ordre d'idée, on peut prévoir que ladite tubulure d'admission présente une fausse paroi le long de sa surface intérieure pour la circulation et l'éjection d'air comprimé à son extrémité inférieure. L'éjection d'air comprimé est destinée, en particulier, à prévenir le retour de particules ou de vapeur. La fausse paroi isolée et refroidie par la circulation d'air comprimé contribue à prévenir le collage à la tubulure des particules sèches durant leur passage à travers celle-ci.

La présente buse est destinée à être utilisée dans une installation d'agglomération comportant une tour d'agglomération équipée des dispositifs nécessaires, tels que des conduites d'alimentation en fluides d'agglomération, ou autres fluides, un dispositif d'alimentation en produits pulvérulents au sommet de la tour, ainsi qu'un dispositif d'évacuation des agglomérats recueillis au bas de la tour, de même que des dispositifs annexes éventuels tels que des moyens d'évacuation des condensats, un dispositif de séchage par circulation d'air chaud avec injection d'air chaud au bas de la tour et évacuation d'air sur un cyclone au haut de la tour, ou un dispositif de séchage en lit fluidisé branché à la suite du dispositif d'évacuation des agglomérats, par exemple.

La présente buse est conçue pour être disposée au sommet d'une telle tour. Pour la faire fonctionner, on relie la ou lesdites chambres de distribution aux conduites d'alimentation en fluide d'agglomération, par l'intermédiaire d'entrées prévues à cet effet dans la paroi extérieure desdites chambres. On peut prévoir une ou plusieurs entrées, notamment des entrées tangentielles, par chambre de distribution. De même, on relie lesdites chambres annulaires de chauffage à une ou à plusieurs conduites d'alimentation en fluides de chauffage ou de tempérage, par l'intermédiaire d'une ou de plusieurs entrées, notamment des entrées tangentielles, prévues à cet effet dans la paroi extérieure de chaque chambre de chauffage. On procède de manière analogue pour l'alimentation éventuelle en d'autres fluides, tels que l'air comprimé par exemple, de chambres de distribution de ces fluides prévues à cet effet dans le corps de la buse ou dans ledit corps supplémentaire éventuel. On relie également la buse à double flux éventuelle à des conduites d'alimentation en liquide et en gaz concernés. On relie enfin les éventuelles sorties de purgeage prévues dans la paroi extérieure des chambres de distribution de fluide d'agglomération et/ou des chambres de chauffage auxdits moyens d'évacuation des condensats qui peuvent être réalisés, par exemple, sous forme de conduites collectrices reliées à un récipient collecteur, éventuellement par l'intermédiaire d'une pompe. Ce purgeage peut s'effectuer en continu ou par intermittence selon les besoins. Quant à la matière pulvérulente à agglomérer, on peut l'introduire dans ledit passage axial en l'y laissant tomber à partir d'un dispositif d'alimentation en forme d'entonnoir ou de trémie, ou par l'intermédiaire d'un distributeur à palettes rotatives par exemple, ce dernier dispositif étant particulièrement recommandé dans le cas où ledit passage axial est de section annulaire, son centre étant occupé par la buse à double flux.

La présente buse permet d'agglomérer les produits pulvérulents ou mélanges de produits pulvérulents les plus divers. Elle se prête particulièrement bien à l'agglomération de produits pulvérulents alimentaires qui sont souvent très délicats et requièrent un très grand soin dans la détermination et le maintien des conditions de fonctionnement, le dessin de la géométrie de la buse et le choix des matières et fluides.

En ce qui concerne ces derniers, les fluides d'agglomération seront le plus souvent une forme gazeuse d'un solvant des particules à agglomérer, qui puisse condenser à la surface des particules et provoquer une légère dissolution superficielle qui permette aux particules de coller entre elles et de former les agglomérats désirés. Des fluides d'appoint tels que l'air comprimé pourront servir au conditionnement du produit pulvérulent, notamment à son refroidissement, ou au nettoyage permanent de zones critiques telles que des angles morts. Des solutions de produits aromatiques ou de condiments, ou des solutions d'agents liants, colorants, mouillants ou émulsifiants, pourront être utilisées comme indiqué plus haut, en combinaison avec un gaz de projection tel que l'air ou une forme gazeuse du solvant desdits agents, en recourant à ladite buse à double flux. Enfin, les fluides de chauffage ou de tempérage desdites chambres seront choisis en sorte de maintenir dans les chambres de distribution par échange de chaleur une température favorable au maintien en phase totalement gazeuse du fluide d'agglomération. On pourra par exemple utiliser comme fluide de chauffage une vapeur d'eau à une pression de quelques bars si l'on utilise comme fluide d'agglomération de la vapeur d'eau à une pression légèrement supérieure ou pratiquement égale à la pression atmosphérique.

La présente buse permet d'utiliser des quantités relatives ou proportions très variables de fluide d'agglomération par rapport au poids des produits pulvérulents à agglomérer, en fonction des impératifs propres aux divers produits pulvérulents. Il est possible de descendre très bas dans ces proportions, jusqu'à une fraction de pour-cent en poids des particules à agglomérer, en rétrécissant la fente d'éjection ou en diluant le fluide d'agglomération dans un gaz porteur, par exemple en mélangeant de l'air et de la vapeur d'eau. Il est possible de monter très haut dans ces proportions, jusqu'à une ou deux dizaines de pour-cent en poids des particules à agglomérer, en élargissant la fente d'éjection ou en recourant au corps supplémentaire ou à la buse à double flux.

En ce qui concerne les dimensions respectives de la buse et des installations, ainsi que les débits horaires possibles, on peut dire que la présente buse permet sans autre de forts débits pour des dimensions modestes. On peut mentionner à titre d'orientation des débits de quelques centaines de kilogrammes à 1 t d'agglomérats par heure pour un diamètre de la fente annulaire d'éjection de l'ordre de 5 ou 6 cm, une largeur de cette fente variant entre environ 1 et 4 mm et une hauteur de tour de l'ordre de 2 ou 3 m.

La buse selon la présente invention est décrite encore ci-après en référence au dessin donné à titre d'exemple et dans lequel:

La fig. 1 représente une vue en coupe verticale d'un mode d'exécution de la présente buse, et

la fig. 2 représente une vue en coupe verticale d'un autre mode d'exécution.

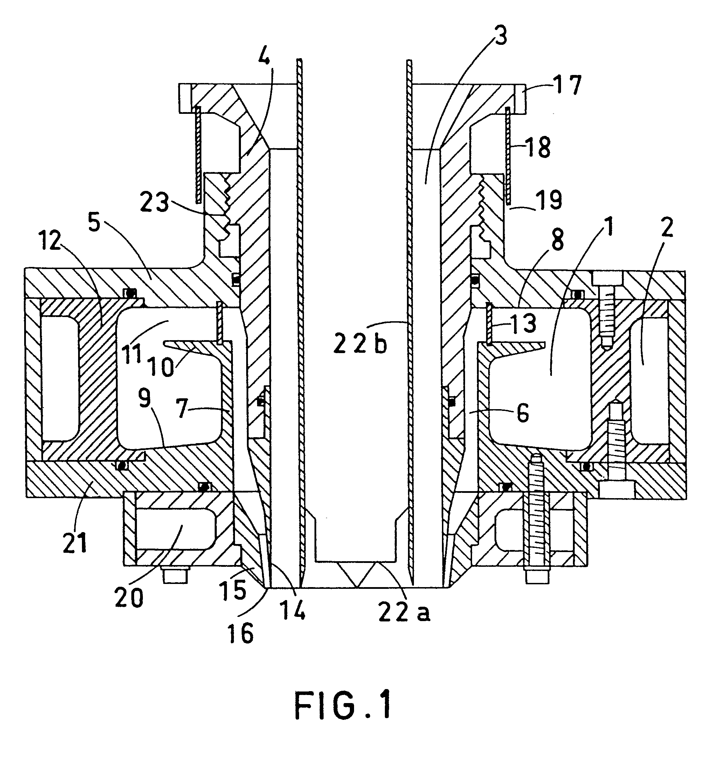

Si l'on se réfère à la fig. 1, on voit que le corps de la buse est réalisé ici sous la forme d'une couronne renfermant la chambre de distribution 1 du fluide d'agglomération et la première chambre de chauffage 2 de la chambre de distribution 1. Le passage axial 3 pour le produit pulvérulent à agglomérer est de section annulaire et il est délimité, à l'extérieur, par la tubulure d'admission 4 vissée dans la partie supérieure 5 dudit corps de manière réglable par rotation sur son axe. La tuyère d'éjection 6 de fluide d'agglomération est délimitée, à l'intérieur, par la surface extérieure de la tubulure 4 et, à l'extérieur, par la paroi intérieure 7 de la chambre de distribution 1.

Cette dernière comporte un plafond 8 délimité par la partie supérieure 5 du corps, un fond 9 incliné radialement vers l'extérieur pour le purgeage de condensats du fluide d'agglomération, la paroi intérieure 7 présentant dans sa partie supérieure une collerette 10 dirigée radialement vers l'extérieur, une ouverture annulaire 11 de distribution entre la collerette 10 et le plafond 8, et une paroi extérieure 12 constituant une paroi intérieure de la première chambre de chauffage 2. Un filtre 13 est disposé dans l'ouverture annulaire 11 de distribution.

L'extrémité de la tuyère d'éjection 6 est formée d'un insert intérieur 14 fixé à l'extrémité inférieure de la tubulure d'admission 4 et d'un insert extérieur 15 disposé dans le prolongement de la paroi intérieure 7. Les deux inserts sont amovibles et délimitent une fente d'éjection 16 annulaire conique convergente, la largeur de la fente étant réglable en marche par rotation de la tubulure 4 dans le corps de la buse. A cet efffet, l'extrémité supérieure évasée de la tubulure 4 présente une collerette moletée 17 et un index 18 permettant la lecture précise de la position de la tubulure sur une échelle graduée 19 prévue sur l'extrémité 5 du corps. La deuxième chambre annulaire coaxiale de chauffage 20 est extérieure et adjacente à l'insert extérieur 15 qu'elle maintient en place en étant elle-même vissée contre le dessous de la chambre de distribution 1, ce dessous faisant partie intégrante de la partie inférieure 21 du corps de la buse.

Enfin, on voit qu'au centre du passage axial 3 on a disposé une buse traditionnelle à double flux 22a dans le tube de guidage 22b.

Les parties supérieure 5 et inférieure 21 du corps de la buse sont reliées entre elles, par l'intermédiaire de la paroi 12 massive et à profil en I, par des vis, pour former un corps compact et robuste. Les problèmes d'étanchéité, très importants dans une construction de ce genre, ont été résolus en prévoyant des joints toriques, représentés par un cercle dans une loge rectangulaire, partout où cela s'est révélé nécessaire. Certaines pièces, telles que les parois extérieures des chambres de chauffage, sont fixées par des soudures (non représentées). L'insert intérieur 14 est chassé léger dans l'extrémité de la tubulure 4. Pratiquement toutes les pièces sont réalisées en acier inoxydable. L'insert intérieur 14, de même que le pas de vis 23, avec le taraudage dans la partie supérieure 5 du corps et le filetage sur la partie supérieure de la tubulure d'admission 4, sont plaqués en nickel amorphe.

Les entrées respectives (non représentées) du fluide d'agglomération et du fluide de chauffage sont pratiquées tangentiellement dans la paroi extérieure de la chambre de distribution 1 et des chambres de chauffage 2 et 20. De même, des sorties de purgeage (non représentées) sont pratiquées dans le bas de la paroi extérieure de toutes ces chambres.

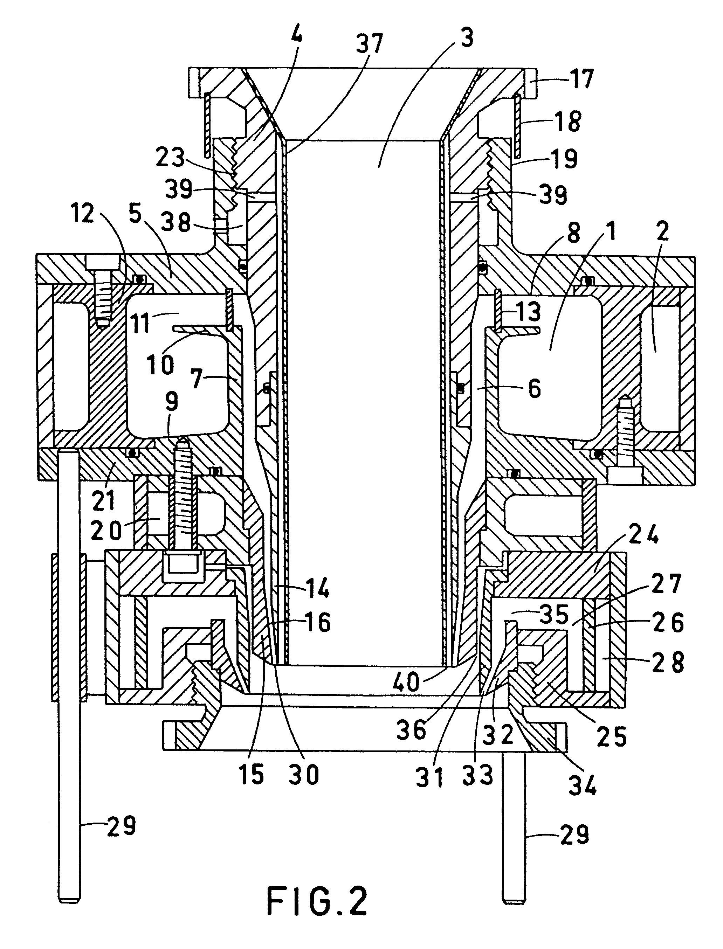

Pour la description de la forme d'exécution représentée à la fig. 2, on a repris les mêmes chiffres de référence qu'à la fig. 1 pour désigner les pièces ou éléments identiques ou remplissant la même fonction. C'est ainsi qu'on retrouve un corps composé des parties supérieure 5 et inférieure 21 reliées par la paroi 12 et abritant la chambre de distribution 1 et la première chambre de chauffage 2. De même, on retrouve la tubulure d'admission 4 vissée dans le corps par le pas de vis 23 de manière réglable en saisissant et tournant la collerette moletée 17, la position exacte de la tubulure pouvant être contrôlée grâce à l'index 18 en regard de l'échelle graduée 19. La réalisation de la chambre de distribution 1 est également très semblable, avec une collerette 10 découpée ici d'un seul bloc dans la partie inférieure 21 du corps et servant donc à empêcher les condensats éventuels de pénétrer dans l'ouverture de distribution 11, ces condensats s'écoulant vers l'extérieur le long du fond incliné 9.

Les inserts extérieurs et intérieurs sont cependant très différents et notamment beaucoup plus longs que ceux représentés à la fig. 1. C'est qu'il est prévu ici de recourir à un corps supplémentaire 24-26 formé d'une partie supérieure 24 et d'une partie inférieure 25 reliées entre elles par une paroi médiane 26 séparant une chambre de distribution supplémentaire 27 de sa chambre de chauffage 28. Ce corps supplémentaire 24-26 peut être soit plaqué sous le corps proprement dit 5-12-21, comme représenté à cette fig. 2, soit maintenu à distance de celui-ci le long des piliers de guidage 29. C'est ainsi que la chambre 20 adjacente à l'insert extérieur 15 et à la chambre de distribution 1 se trouve prise en sandwich entre le corps proprement dit et le corps supplémentaire, à une certaine distance de l'orifice annulaire de sortie 30 de la fente d'éjection 16, afin que les lèvres supérieure 31 et inférieure 32 délimitant une fente d'éjection principale 33 du corps supplémentaire puissent trouver place autour de l'extrémité de l'insert extérieur 15. L'épaisseur de cette fente 33 est réglable par rotation de l'anneau à collerette moletée 34 vissé par-dessous, de manière réglable, dans la partie inférieure 25 du corps supplémentaire et supportant la lèvre inférieure 32. Cette fente d'éjection 33 est alimentée par la chambre de distribution 27 directement à travers l'ouverture annulaire de distribution 35; elle représente donc à elle seule toute la tuyère d'éjection de fluide d'agglomération du corps supplémentaire. Le dessus du corps supplémentaire et la lèvre supérieure 31 sont conçus en sorte que l'on puisse éjecter de l'air comprimé par la fente secondaire 36 délimitée par l'extrémité de l'insert extérieur 15 et par la lèvre supérieure 31 lorsque le corps supplémentaire est plaqué sous le corps proprement dit, cela en particulier pour éviter l'accumulation de particules entre l'insert et la lèvre en question.

Le passage axial 3 de ce mode d'exécution tel que représenté à la fig. 2 est de section circulaire. Il est délimité par une fausse paroi 37 fixée en quelques points sur la surface intérieure de la tubulure 4 et soudée de manière étanche au début de la partie évasée au sommet de la tubulure. De l'air comprimé peut être injecté sous cette fausse paroi par l'intermédiaire de la chambre de distribution 38 prévue à cet effet dans la partie supérieure 5 du corps, et à travers les ouvertures de distribution 39 pratiquées dans le haut de la tubulure. Cet air est éjecté par la sortie annulaire 40 délimitée par l'extrémité inférieure de la fausse paroi 37 et par l'extrémité de l'insert intérieur 14.

Sur la fig. 2, les entrées de fluide dans les différentes chambres de distribution et de chauffage, ainsi que les sorties de purgeage, ne sont pas non plus représentées afin de ne pas surcharger le dessin et nuire à sa clarté.

## Revendications

1. Buse d'agglomération, comprenant un corps (5-12-21) évidé axialement et verticalement dans lequel sont prévus un passage axial (3) pour l'admission d'un produit pulvérulent à agglomérer, au moins une tuyère annulaire d'éjection (6) coaxiale et extérieure audit passage pour l'éjection d'un fluide d'agglomération, et au moins une chambre annulaire de distribution (1) coaxiale et extérieure à ladite tuyère pour la distribution du fluide d'agglomération dans la tuyère, caractérisée par le fait qu'elle comporte en outre au moins une première chambre annulaire coaxiale de chauffage (2) extérieure et adjacente à ladite chambre de distribution (1) pour le chauffage de cette dernière, et au moins une deuxième chambre annulaire coaxiale de chauffage (20) extérieure et adjacente à l'extrémité de ladite tuyère d'éjection (6) et disposée au-dessous de la chambre de distribution (1) pour le chauffage de cette dernière et de l'extrémité de la tuyère.

2. Buse d'agglomération selon la revendication 1, caractérisée par le fait que ledit passage axial (3) est délimité par une tubulure d'admission (4) vissée dans la partie supérieure (5) dudit corps de manière réglable par rotation sur son axe, et ladite tuyère (86) est délimitée, à l'intérieur, par la surface extérieure de ladite tubulure (4) et, à l'extérieur, par une paroi intérieure (7) de ladite chambre de distribution (1).

3. Buse d'agglomération selon la revendication 2, caractérisée par le fait que la chambre annulaire de distribution (1) comporte un plafond (8), un fond (9) incliné radialement vers l'extérieur pour le purgeage de condensats du fluide d'agglomération, ladite paroi intérieure (7) présentant dans sa partie supérieure une collerette (10) dirigée radialement vers l'extérieur, une ouverture annulaire de distribution (11) entre la collerette et le plafond, et une paroi extérieure (12) constituant une paroi intérieure de ladite première chambre de chauffage (2).

4. Buse d'agglomération selon la revendication 3, caractérisée par le fait qu'un filtre annulaire (3) est disposé dans ladite ouverture annulaire de distribution (11).

5. Buse d'agglomération selon la revendication 3, caractérisée par le fait que ladite extrémité de la tuyère d'éjection (6) est formée d'un insert intérieur (14) fixé à l'extrémité inférieure de ladite tubulure d'admission (4) et d'un insert extérieur (15) disposé dans le prolongement de ladite paroi intérieure (12) de la chambre de distribution (1), les deux inserts étant amovibles et délimitant une fente d'éjection (16) annulaire conique convergente, la largeur de la fente étant réglable en marche par rotation de ladite tubulure (4) dans ledit corps (5).

6. Buse d'agglomération selon la revendication 5, caractérisée par le fait que les pièces sont réalisées en acier inoxydable, et que le filetage (23) de ladite tubulure (4) et le taraudage (23) correspondant dudit corps (5), de même que ledit insert intérieur (14) de la tuyère (6), sont plaqués en nickel amorphe.

7. Buse d'agglomération selon la revendication 2, caractérisée par le fait que ledit passage axial (3) est annulaire et délimité à l'intérieur par un tube de guidage (22b) à l'intérieur duquel est disposée une buse à double flux (22a) pour la projection d'un aérosol.

8. Buse d'agglomération selon la revendication 1, caractérisée par le fait qu'elle comporte un corps supplémentaire (24-26) amovible sous ledit corps (5-12-21), serré contre ou à distance de celui-ci, ce corps supplémentaire présentant également un passage axial et, coaxialement de l'intérieur vers l'extérieur, au moins une tuyère d'éjection (33) de fluide, une chambre de distribution (27) de fluide et une chambre de chauffage (28).

9. Buse d'éjection selon la revendication 2, caractérisée par le fait que la tubulure d'admission (4) présente une fausse paroi (37) le long de sa surface intérieure pour la circulation et l'éjection d'air comprimé à son extrémité inférieure.

## Claims

1. An agglomeration nozzle comprising a main housing (5-12-21) having a vertical, axial opening (3) in which the following elements are provided: an axial passage for the admission of a pulverulent product to be agglomerated, at least one annular discharge duct (6) which is coaxial with and outside the axial passage for the discharge of an agglomeration fluid, and at least one annular distribution chamber (1) which is coaxial with and outside the duct for the distribution of the agglomeration fluid into the duct, wherein the nozzle also comprises at least one first annular, coaxial heating chamber (2) which is outside and adjacent to the distribution chamber (1) for heating the distribution chamber, and at least one second annular, coaxial heating chamber (20) which is outside and adjacent to the end of the discharge duct (6) and is positioned below the distribution chamber (1) for heating the latter chamber and the outlet end of the duct.

2. An agglomeration nozzle as claimed in Claim 1, wherein the axial passage (3) is defined by an inlet pipe (4) which is screwed into the top part (5) of the housing and is adjustable by rotation about its axis, and the duct (6) is defined on the inside by the external surface of the inlet pipe (4) and on the outside by an inside wall (7) of the distribution chamber (1).

3. An agglomeration nozzle as claimed in Claim 2, wherein the annular distribution chamber (1) comprises a ceiling (8), a floor (9) which is inclined radially towards the outside to drain condensates of the agglomeration fluid, said inside wall (7) having at its top part a flange (10) which is directed radially and outwardly, an annular distribution opening (11) between the flange and the ceiling of the distribution chamber, and an outside wall (12) forming an inside wall of the first heating chamber.

4. An agglomeration nozzle as claimed in Claim 3, wherein an annular filter (13) is positioned in the annular distribution opening (11).

5. An agglomeration nozzle as claimed in Claim 3, wherein the end of the discharge duct (6) is formed between an internal insert (14) attached to the lower end of the inlet pipe (4) and an external insert (15) positioned in the extension of the inside wall (12) of the distribution chamber (1), the two inserts being removable and defining a converging, conical, annular discharge slit (16), the width of the slit being adjustable during operation by rotation of the inlet pipe (4) in the housing (5).

6. An agglomeration nozzle as claimed in Claim 5, wherein the parts are made of stainless steel and the external thread (23) of the pipe (4), the corresponding internal thread (23) of the housing (5) and the internal insert (14) of the duct (6) are plated with amorphous nickel.

7. An agglomeration nozzle as claimed in Claim 2, wherein the axial passage (3) is annular and is defined on the inside by a guide tube (22b) inside which a two-fluid nozzle (22a) is positioned for the projection of a fine spray.

8. An agglomeration nozzle as claimed in Claim 1, which includes a removable secondary housing (24-26) arranged below the main housing (5-12-21) or attached thereto, the secondary housing comprising an axial passage and, coaxially from the inside towards the outside, at least one fluid discharge duct (33), a chamber (27) for the distribution of fluid and a heating chamber (28).

9. An agglomeration nozzle according to Claim 2, wherein the inlet pipe (4) has a dummy wall (37) along its internal surface for the circulation and discharge of compressed gas at its lower end.

## Patentansprüche

1. Düse zum Agglomerieren mit einem axial und vertikal durchbrochenen Gehäuse (5-12-21), in welchem ein Axialdurchlass (3) zum Zuführen eines zu agglomerierenden pulverförmigen Produktes, mindestens eine ringförmige Ausblasdüse (6), die koaxial zu und an der Aussenseite des Durchlasses (3) zum Ausblasen eines Agglomerationsfluid angeordnet ist, und mindestens eine ringförmige Verteilkammer (1) vorgesehen sind, die koaxial zu und an der Aussenseite der Ausblasdüse angeordnet ist, um das Agglomerationsfluid in der Düse zu verteilen, dadurch gekennzeichnet, dass sie ausserdem mindestens eine erste koaxiale ringförmige Heizkammer (2), die an der Aussenseite und neben der Verteilkammer (1) zum Beheizen der letzteren angeordnet ist, und mindestens eine zweite ringförmige koaxiale Heizkammer (20) aufweist, die an der Aussenseite und neben dem Ende der Ausblasdüse (6) vorgesehen und unterhalb der Verteilkammer (1) angeordnet ist, um diese und das äussere Ende der Düse zu beheizen.

2. Düse zum Agglomerieren nach Anspruch 1, dadurch gekennzeichnet, dass der Axialdurchlass (3) durch einen Einlassrohrstutzen (4) begrenzt ist, der im Oberteil (5) des Gehäuses durch Drehung um seine Achse einstellbar eingeschraubt ist, und dass die Ausblasdüse (6) an ihrer Innenseite durch die Aussenseite des Rohrstutzens (4) und an ihrer Aussenseite durch eine innere Wand (7) der Verteilkammer (1) begrenzt ist.

3. Düse zum Agglomerieren nach Anspruch 2, dadurch gekennzeichnet, dass die ringförmige Verteilkammer (1) einen Plafond (8) und einen radial gegen die Aussenseite geneigten Boden (9) zur Ableitung des Kondensats des Agglomerationsfluid aufweist, wobei die innere Wand (7) an ihrem Oberteil einen radial nach aussen gerichteten Flansch (10) hat, und das zwischen dem Flansch und dem Plafond eine ringförmige Verteilöffnung (11) vorgesehen ist, und eine Aussenwand (12) eine innenwand der ersten Heizkammer (2) bildet.

4. Düse zum Agglomerieren nach Anspruch 3, dadurch gekennzeichnet, dass in der ringförmigen Verteilöffnung (11) ein ringförmiger Filter (13) angeordnet ist.

5. Düse zum Agglomerieren nach Anspruch 3, dadurch gekennzeichnet, dass das Ende der Ausblasdüse (6) durch einen am unteren Ende des Einlassrohrstutzens (4) befestigten inneren Einsatz (14) sowie einen an der Verlängerung der Innenwand (12) der Verteilkammer (1) angeordneten äusseren Einsatz (15) gebildet ist, wobei die beiden Einsätze lösbar befestigt sind und einen ringförmigen, sich konisch verjüngenden Ausblasspalt (16) begrenzen, dessen Breite im Betrieb durch Drehen des Rohrstutzens (4) im Gehäuse (5) einstellbar ist.

6. Düse zum Agglomerieren nach Anspruch 5, dadurch gekennzeichnet, dass die Bauteile aus rostfreiem Stahl hergestellt sind und das Gewinde (23) des Rohrstutzens (4) und das entsprechende Innengewinde (23) am Gehäuse (5) sowie der innere Einsatz (14) der Düse (6) mit amorphem Nickel plattiert sind.

7. Düse zum Agglomerieren nach Anspruch 2, dadurch gekennzeichnet, dass der Axialdurchlass (3) ringförmig ist und an seiner Innenseite durch ein Führungsrohr (22b) begrenzt ist, in dessen Inneren eine Zweistromdüse (22a) zum Versprühen von Aerosol vorgesehen ist.

8. Düse zum Agglomerieren nach Anspruch 1, dadurch gekennzeichnet, dass sie ein Zusatzgehäuse (24-26), das an der Unterseite des Gehäuses (5-12-21) mit Abstand von diesem lösbar angeschraubt ist, wobei das Zusatzgehäuse ebenfalls einen Axialdurchlass (3) und koaxial von innen nach aussen mindestens eine Fluidausblasdüse (33), eine Fluidverteilkammer (27) und eine Heizkammer (28) aufweist.

9. Düse zum Agglomerieren nach Anspruch 2, dadurch gekennzeichnet, dass der Einlassrohrstutzen (4) an seiner Innenseite ein Futter (37) für die Zirkulation und zum Ausblasen von Druckluft an seinem unteren Ende aufweist.

FIG.1

FIG.2